# EUROPEAN PATENT APPLICATION

(11) **EP 4 768 878 A1**
(43) Date of publication of application: **01.07.2026**
(21) Application number: 24856530.1
(22) Date of filing: 22.08.2024
(51) Int. Cl.: G01L 1/24, G01L 1/00, G01L 5/00, G01L 5/166

(54) **PRESSURE SENSOR**

(30) Priority: 22.08.2023 JP 2023134408
(71) Applicant: The University of Tokyo, Bunkyo-ku, Tokyo 113-8654 (JP)
(72) Inventor: SOMEYA Takao, Tokyo 113-8654 (JP); YOKOTA Tomoyuki, Tokyo 113-8654 (JP); LEE Sunghoon, Tokyo 113-8654 (JP); WANG Haoyang, Tokyo 113-8654 (JP)
(74) Representative: J A Kemp LLP
(86) International application number: PCT/JP2024/029889
(87) International publication number: WO 2025/041842

(57) **Abstract**

To provide a pressure sensor having a thin-film form and flexibility, particularly a multipoint three-axis pressure sensor capable of detecting a pressure distribution in three axial directions. The pressure sensor includes a porous rubber layer 100 having a first main surface 101 and a second main surface 102, a photoirradiation layer disposed on the first main surface, and a light detection layer disposed on the second main surface. Spot-like light is irradiated onto the porous rubber layer along a direction from the first main surface toward the second main surface. A pressure applied to the porous rubber layer is measured based on an intensity distribution, at the second main surface, of the spot-like light irradiated onto the first main surface, the intensity distribution changing in accordance with a pressure applied to the porous rubber layer.

## Description

### Technical Field

The present invention relates to a pressure sensor, particularly to a multipoint three-axis pressure sensor capable of detecting a pressure distribution in three axial directions.

### Background Art

A multipoint three-axis pressure sensor capable of detecting a high-resolution surface pressure distribution can acquire information similar to human tactile sensation, and may play an important role, for example, in applications to robotics, medical or welfare equipment, or the like. Therefore, a three-axis pressure sensor has been developed and proposed (for example, refer to Non-Patent Literature 1).

There is known a pressure sensor that measures electric capacity and electric resistance, and measurement technologies based on optics are also rapidly developing (for example, refer to Patent Literature 1).

A pressure sensor based on optics detects a pressure, for example, by using deformable rubber and measuring a change in an optical signal when a load is applied to the rubber.

### Citation List

### Patent Literature

Patent Literature 1: Japanese Patent Laid-Open No. 2011-7557

### Non-Patent Literature

Non-Patent Literature 1: Yuan, W., et al. (2017). Sensors, 17 (12), 2762.

### Summary of Invention

### Technical Problem

However, conventional pressure sensors based on optics have problems such as thickness limitations due to use of an imaging optical system such as a lens, and inability to detect three-axis pressure. For this reason, a three-axis pressure sensor having a thin-film form and flexibility has not been obtained.

The present invention has been made in view of the situation described above. The present invention aims to provide a pressure sensor having a thin-film form and flexibility, particularly a multipoint three-axis pressure sensor capable of detecting a pressure distribution in three axial directions.

### Solution to Problem

According to a preferred embodiment of the pressure sensor of the present invention, the pressure sensor includes a porous rubber layer having a first main surface and a second main surface, a photoirradiation layer disposed on the first main surface, and a light detection layer disposed on the second main surface.

The porous rubber layer is irradiated with spot-like light along a direction from the first main surface toward the second main surface.

A pressure applied to the porous rubber layer is measured based on an intensity distribution, at the second main surface, of the spot-like light irradiated onto the first main surface, the intensity distribution changing in accordance with the pressure applied to the porous rubber layer.

According to a further preferred embodiment of the pressure sensor of the present invention, a pressure in a direction orthogonal to the first main surface is measured based on sharpness of the intensity distribution, at the second main surface, of the spot-like light irradiated onto the first main surface, the sharpness changing in accordance with a magnitude of the pressure applied to the porous rubber layer in the direction orthogonal to the first main surface. Additionally, two-axis pressure in directions parallel to the first main surface can be measured based on position information of the intensity distribution, at the second main surface, of the spot-like light irradiated onto the first main surface, the position information changing in accordance with a magnitude of the pressure applied to the porous rubber layer in the directions parallel to the first main surface.

The light detection layer includes light receiving elements that are two-dimensionally arranged, and it is preferable that one unit is constituted of the plurality of light receiving elements. One spot-like light is irradiated onto a vicinity of a center of this unit. It is preferable that units are two-dimensionally arranged.

The porous rubber layer, the photoirradiation layer, and the light detection layer preferably have a thin film structure having flexibility.

The photoirradiation layer may be configured to include a light guide layer and reflective layers provided on both surfaces of the light guide layer, and an opening being disposed in the reflective layer on the porous rubber layer side, wherein light is introduced from the outside into the light guide layer in a direction along the first main surface, and spot-like light is irradiated onto the porous rubber layer through the opening. Furthermore, the photoirradiation layer preferably includes a diffusion layer between the light guide layer and the reflective layer.

Additionally, the photoirradiation layer may be constituted of a surface-emitting light source using organic electroluminescence, a light shielding layer may be disposed on a light irradiation surface of the photoirradiation layer that is in contact with the porous rubber layer, an opening may be disposed in the light shielding layer, and spot-like light may be irradiated onto the porous rubber layer through the opening.

Alternatively, the photoirradiation layer may be configured by arranging a highly directional micro LED on a substrate, and the micro LED may be configured to emit spot-like light in a direction orthogonal to the first main surface. In this case, the light detection layer includes light receiving elements that are two-dimensionally arranged, and one unit is preferably constituted of one micro LED and the plurality of light receiving elements.

A ratio (d/D) of a thickness d of the porous rubber layer to an average diameter D of pores formed in the porous rubber layer is preferably 2 to 20.

### Advantageous Effect of Invention

With the pressure sensor according to the present invention, pressures applied in a vertical direction and a horizontal direction can be reconstructed. Additionally, in the pressure sensor according to the present invention, each of the layers constituting the pressure sensor is constituted of a thin film having flexibility, and the pressure sensor itself also has flexibility, thereby enabling measurement even in a bent state.

### Brief Description of Drawings

[Figure 1] Figure 1 is a schematic diagram for explaining a principle of a pressure sensor according to the present invention.
[Figure 2] Figure 2 is a schematic diagram for explaining a configuration of the pressure sensor according to the present invention.
[Figure 3] Figure 3 is a diagram illustrating angular dependence of light intensity depending on presence/absence of a diffusion layer.
[Figure 4] Figure 4 is a schematic diagram for explaining a method for manufacturing a diffusion film.
[Figure 5] Figure 5 is a schematic diagram for explaining a method for manufacturing a photoirradiation layer.
[Figure 6] Figure 6 is a schematic circuit diagram of a light detection layer.
[Figure 7] Figure 7 is a schematic diagram for explaining a PD as a constituent element of a light receiving element.
[Figure 8] Figure 8 is a plan view illustrating an entire effective area of a multipoint pressure sensor.
[Figure 9] Figure 9 is a plan view illustrating one unit.
[Figure 10] Figure 10 is a schematic diagram for explaining a method for pressure detection.
[Figure 11] Figure 11 is a diagram illustrating a result of pressure detection by one unit.
[Figure 12] Figure 12 is a schematic diagram for explaining detection by a plurality of units.
[Figure 13] Figure 13 is a schematic diagram for explaining a measurement result obtained when the pressure sensor according to the present invention is bent.
[Figure 14] Figure 14 is a schematic diagram for explaining another configuration example of the photoirradiation layer.

### Description of Embodiments

Hereinafter, an embodiment of the present invention will be described with reference to the drawings. However, each drawing is merely schematically illustrated to an extent that allows the present invention to be understood. Preferred configuration examples of the present invention will be described below, but these are merely preferred examples. Thus, the present invention is not limited to the embodiment described below, and many modifications or variations can be made without departing from a scope of a configuration of the present invention while achieving effects of the present invention.

### (Principle of invention)

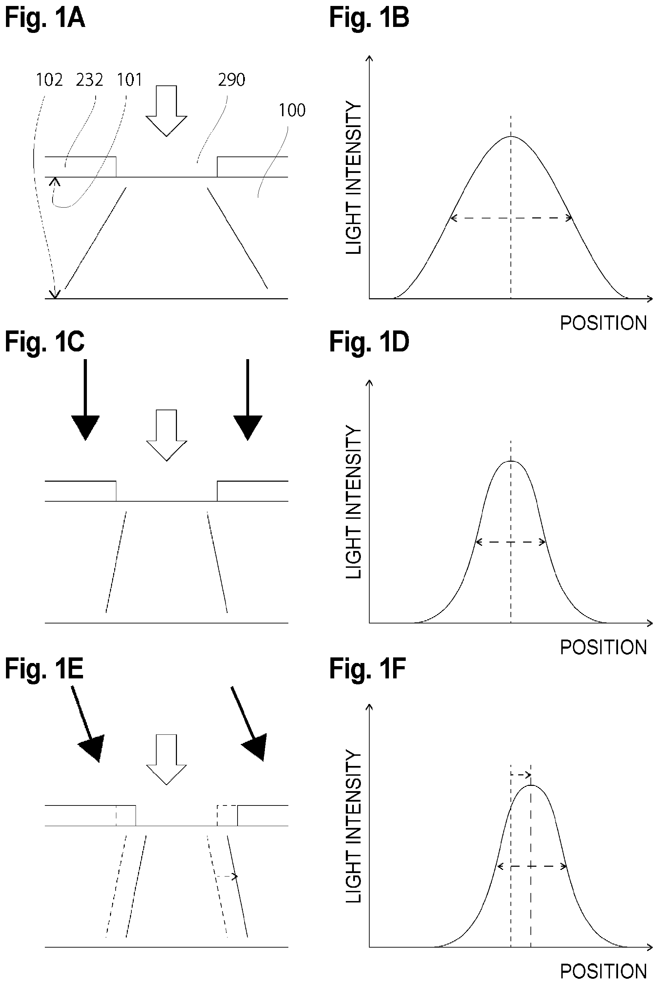

With reference to Figure 1, a principle of a pressure sensor according to the present invention will be described. Figure 1 is a schematic diagram for explaining the principle of the pressure sensor according to the present invention. Figures 1(A), 1(C), and 1(E) illustrate cut end surfaces that are orthogonal to a first main surface and a second main surface of a porous rubber layer and extend in a longitudinal direction. Figures 1(B), 1(D), and 1(F) are schematic diagrams illustrating a light intensity distribution at the second main surface. In Figures 1(B), 1(D), and 1(F), a horizontal axis indicates a position in the longitudinal direction, and a vertical axis indicates light intensity. The light intensity is normalized by a peak intensity in each case.

Herein, Figures 1(A) and 1(B) illustrate a case where no pressure is applied to the porous rubber layer, Figures 1(C) and 1(D) illustrate a case where a pressure is applied to the porous rubber layer in a direction orthogonal to the first main surface (hereinafter, also referred to as a vertical direction), and Figures 1(E) and 1(F) illustrate a case where a pressure in the vertical direction and a pressure in a direction parallel to the first main surface (hereinafter, also referred to as a horizontal direction) are applied to the porous rubber layer at the same time. Herein, the horizontal direction is assumed to be a direction along the longitudinal direction.

Spot-like light is incident from a first main surface 101 of a porous rubber layer 100 toward a second main surface 102 of the porous rubber layer 100 along a direction orthogonal to the first main surface 101. Herein, the first main surface 101 and the second main surface 102 refer to surfaces having the largest area among surfaces of the porous rubber layer 100. In a case where the porous rubber layer 100 has a thin-plate shape, the first main surface 101 and the second main surface 102 are parallel to each other.

A reflective layer 232 having an opening 290 is arranged on the first main surface 101. Spot-like light is incident on the porous rubber layer 100 through the opening 290. The spot-like light incident from the first main surface 101 through the opening 290 is sent to the second main surface 102. At this time, sharpness and position information of a light spot at the second main surface 102 change depending on a pressure applied to the porous rubber layer 100. Herein, sharpness of the light spot can be represented, for example, by a standard deviation σ when an intensity distribution of the light spot at the second main surface 102 is approximated to a Gaussian distribution.

In a state where no pressure is applied to the porous rubber layer 100 as illustrated in Figures 1(A) and 1(B), light that is incident on the porous rubber layer 100 through the opening 290 spreads due to light scattering in the porous rubber layer 100. As a result, a blurred spot having a large standard deviation σ is generated at the second main surface 102.

On the other hand, as illustrated in Figures 1(C) and 1(D), when a pressure in the vertical direction is applied to the first main surface 101 of the porous rubber layer 100, light scattering within the porous rubber layer 100 is weakened, and light that is incident on the porous rubber layer 100 through the opening 290 is more concentrated at a center, thereby increasing sharpness. As a result, a clearer spot having a small standard deviation σ is generated at the second main surface 102.

Accordingly, the pressure in the vertical direction applied to the porous rubber layer 100 can be acquired based on the sharpness of the light spot at the second main surface 102.

When a pressure in the horizontal direction is applied to the first main surface 101 of the porous rubber layer 100, the first main surface 101 is displaced in the horizontal direction with respect to the second main surface 102, and a position of the opening 290 disposed in the first main surface 101 is also changed with respect to the second main surface 102. As a result, as illustrated in Figures 1(E) and 1(F), a position of the light spot on the second main surface 102 is also changed in accordance with displacement of the opening 290.

Accordingly, the pressure in the horizontal direction applied to the porous rubber layer 100 can be acquired based on position information of the intensity distribution of the light spot at the second main surface 102, for example, a change in a peak position of the intensity distribution.

In this manner, with the pressure sensor of the present invention, a pressure applied to the porous rubber layer 100 in three axial directions can be reconstructed based on the sharpness and position information of the intensity distribution of the light spot at the second main surface 102.

The light spot is detected by a plurality of light receiving elements arranged on the second main surface side, for example. The plurality of light receiving elements are arranged toward the first main surface, and receive light in a direction from the first main surface toward the second main surface.

In the pressure sensor of the present invention, one unit is constituted of one opening and the plurality of light receiving elements. Spot-like light is irradiated onto the porous rubber layer through this opening. In a case where projection is performed onto an XY plane parallel to the first main surface, one unit is constituted of a region including a plurality of light receiving elements, and one opening is arranged in a vicinity of a center of this region.

The light that has passed through the opening is received by the plurality of light receiving elements. Each of the light receiving elements outputs a signal (for example, an electric signal) corresponding to intensity of the received light. The signal output from each of the light receiving elements is sent to an electronic computer such as a personal computer through any suitable electronic circuit including an amplifier, a filter, and an analog-to-digital converter, for example. The electronic computer acquires sharpness and position information of the light spot from an intensity distribution of the light received at the second main surface based on the signal that has been sent from each of the light receiving elements through the electronic circuit, and reconstructs the pressure applied to the porous rubber layer in three axial directions based thereon.

Herein, an example of light irradiated through the opening is mainly described as spot-like light, but the embodiment is not limited thereto. In a case of using a point light source having high directivity as a light source, for example, light output from the point light source becomes spot-like, so that the opening does not need to be disposed. In this case, one unit is constituted of one point light source and a plurality of light receiving elements.

In both of a case of generating spot-like light using the opening and a case of generating spot-like light using the point light source, a plurality of beams of discrete spot-like light can be generated by arranging openings or point light sources to be spaced apart from each other, and the pressure sensor can be used as a multipoint pressure sensor.

### (Embodiment)

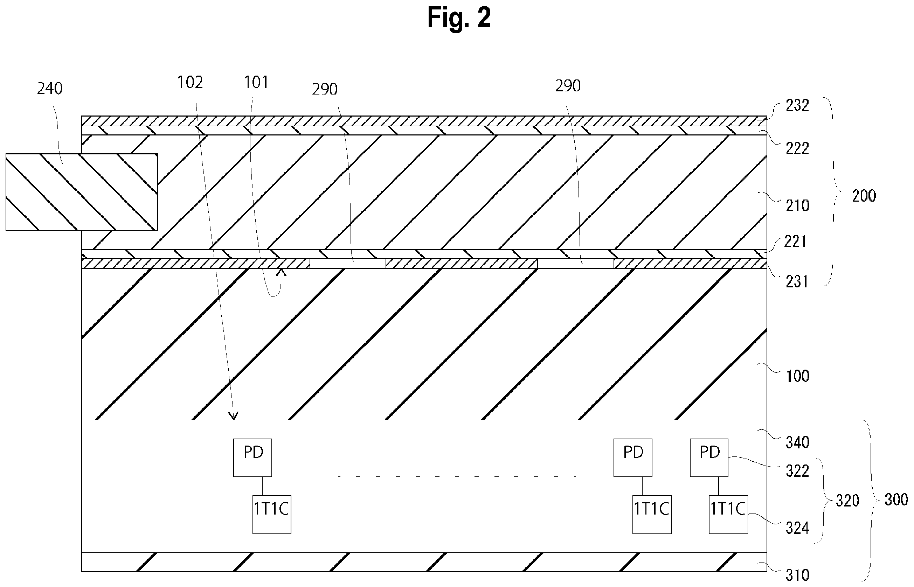

With reference to Figure 2, an embodiment of the pressure sensor of the present invention will be described. Figure 2 is a schematic diagram for explaining a configuration of the pressure sensor of the present invention. Figure 2 illustrates a cut end surface that is orthogonal to the first main surface and the second main surface of the porous rubber layer and extends in a longitudinal direction. Herein, the longitudinal direction is a propagation direction of light introduced into a light guide layer described later.

The pressure sensor of the present invention includes a light detection layer 300, the porous rubber layer 100, and a photoirradiation layer 200, which are stacked in this order. Of two main surfaces of the porous rubber layer 100, the photoirradiation layer 200 is disposed on the first main surface 101, and the light detection layer 300 is disposed on the second main surface 102.

### (Photoirradiation layer)

The photoirradiation layer 200 causes light introduced from the outside to be incident on the porous rubber layer 100. The photoirradiation layer 200 is constituted of a thin film structure having flexibility. The photoirradiation layer 200 includes a light guide layer 210, and reflective layers 231 and 232 provided on both surfaces of the light guide layer 210.

An optical fiber 240 extending in a direction parallel to the first main surface 101 (the longitudinal direction or the propagation direction of light) is attached to the light guide layer 210. As light from the outside, light from any suitable light source such as a Laser Diode (LD) is introduced into the light guide layer 210 in a direction along the first main surface 101 through the optical fiber 240. The light introduced into the light guide layer 210 is reflected by the reflective layers 231 and 232 disposed on both surfaces of the light guide layer 210, and propagates through the light guide layer 210. The LD is not illustrated.

Of the reflective layers 231 and 232 disposed on both surfaces of the light guide layer 210, the opening 290 is disposed on the reflective layer 231 on the porous rubber layer 100 side. The light propagating through the light guide layer 210 is irradiated onto the porous rubber layer 100 through the opening 290.

To emit light onto the porous rubber layer 100 uniformly from a plurality of openings 290 by disposing the plurality of openings 290, diffusion layers 221 and 222 are preferably disposed between the light guide layer 210 and the reflective layers 231 and 232.

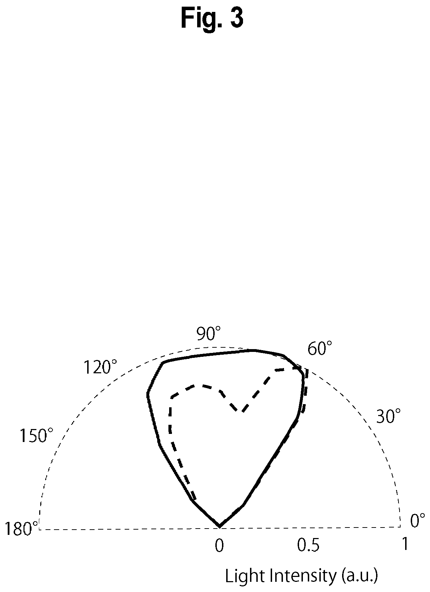

With reference to Figure 3, functions of the diffusion layers 221 and 222 will be described. Figure 3 is a diagram illustrating angular dependence of light intensity depending on presence/absence of the diffusion layer. In Figure 3, a case where the diffusion layer is present is indicated by a solid line, and a case where no diffusion layer is present is indicated by a dashed line. 0° and 180° correspond to a direction parallel to the first main surface, and 90° indicates a direction orthogonal to the first main surface. As illustrated in Figure 3, in a case where the diffusion layer is present, light intensity in a 90° direction, that is, in a direction orthogonal to the first main surface, is larger than that in a case where no diffusion layer is present, and a degree of left-right symmetry with respect to the 90° direction is high, so that it can be found that light in the direction orthogonal to the first main surface can be irradiated onto the porous rubber layer efficiently and uniformly.

The light guide layer 210 is formed of, for example, polydimethylsiloxane (PDMS) having a thickness of 150 µm. The optical fiber 240 that introduces light into the light guide layer 210 is, for example, a multimode optical fiber having a diameter of 125 µm. A wavelength of light irradiated by the LD is, for example, 655 nm.

The diffusion layers 221 and 222 are formed by embedding TiO₂ particles in PDMS having a thickness of 2 to 3 µm, for example.

The reflective layers 231 and 232 are formed of silver having a thickness of 500 nm, for example.

### (Method for manufacturing diffusion film)

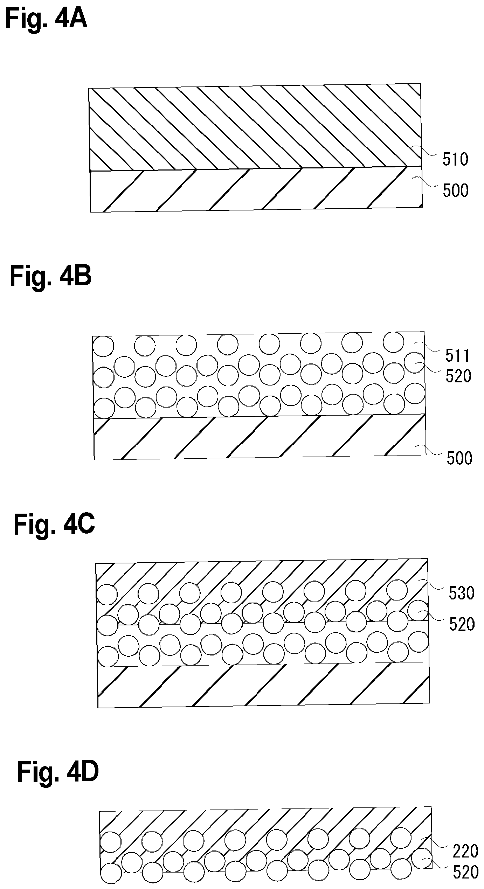

With reference to Figure 4, a method for manufacturing a diffusion film constituting the diffusion layer will be described. Figure 4 is a schematic diagram for explaining the method for manufacturing the diffusion film.

First, TiO₂ nanopowder having an average size of 300 nm is mixed with ethanol at a weight ratio of 1:7, and 5% of Triton X-100 (manufactured by Sigma-Aldrich Co. LLC) is added thereto as a surface-active agent. These materials are mixed by an ultrasonic disperser.

Next, paste obtained by mixing is blade-coated onto a glass substrate 500 to form a uniform TiO₂ particle layer 510 (Figure 4(A)).

Next, by annealing the uniform TiO₂ particle layer 510 at 370°C for 2 hours or more, the surface-active agent is removed to form a porous TiO₂ particle layer 511 (Figure 4(B)).

Next, a PDMS precursor liquid 530 generated by mixing PDMS with a curing agent at a weight ratio of 10:1 is spin-coated onto a surface of the porous TiO₂ particle layer 511. The PDMS precursor liquid 530 infiltrates into the porous TiO₂ particle layer 511 from a surface of the porous TiO₂ particle layer 511 to a certain depth (Figure 4(C)).

Next, the PDMS is cured at 120°C and peeled off from the glass substrate 500. When the PDMS is peeled off from the glass substrate 500, TiO₂ particles 520 near the surface that are surrounded by the PDMS are peeled off together with the PDMS due to infiltration of the PDMS precursor liquid. As a result, a diffusion film 220 in which the TiO₂ particles 520 are embedded in a surface of the PDMS is formed (Figure 4(D)).

### (Method for manufacturing photoirradiation layer)

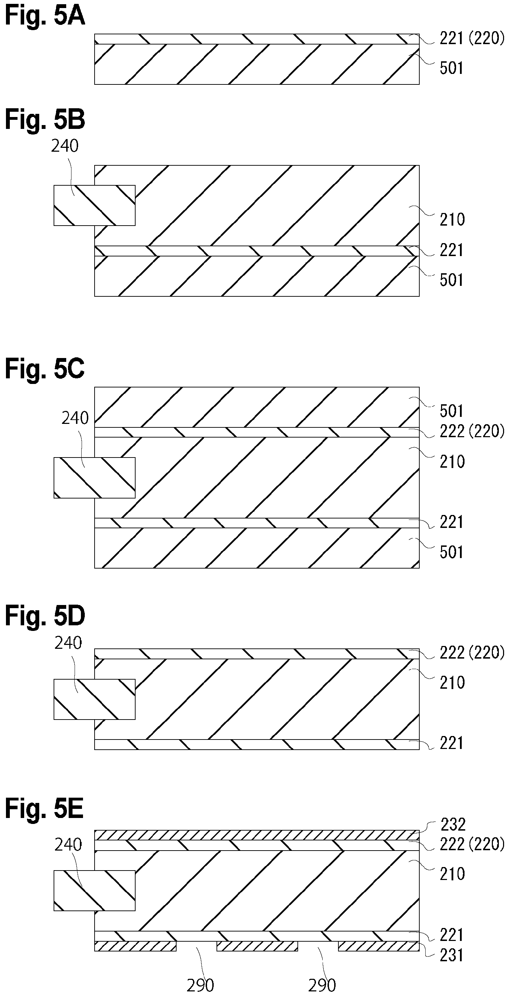

With reference to Figure 5, a method for manufacturing the photoirradiation layer will be described. Figure 5 is a schematic diagram for explaining the method for manufacturing the photoirradiation layer.

One of the diffusion films 221 (220) generated by the manufacturing method described above is placed on a glass substrate 501 (Figure 5(A)).

Next, the PDMS constituting the light guide layer 210 is spin-coated onto the diffusion film 221. At this time, spin-coating is performed so that the optical fiber 240 is embedded in an end part of the light guide layer 210. For example, as an example of the pressure sensor of the present invention, in a case of forming a multipoint pressure sensor having a rectangular shape with an effective area of 3 × 4 cm², the photoirradiation layer 200 is also formed in a rectangular shape, and three optical fibers 240 are arranged at intervals of 1 cm on one short side (Figure 5(B)).

Next, before the spin-coated PDMS is completely cured, another one of the diffusion films 222 (220) generated by the above-described manufacturing method is placed on the PDMS. Accordingly, the diffusion layers 221 and 222 in which the TiO₂ particles are embedded in the PDMS are formed on both surfaces of the light guide layer 210 of the PDMS (Figure 5(C)).

After the PDMS is completely cured and the light guide layer 210 is formed, a structure in which the diffusion layers 221 and 222 are formed on both surfaces of the light guide layer 210 is peeled off from the glass substrate 501 (Figure 5(D)).

Separately from this, silver having a thickness of 500 nm is thermally evaporated onto a polyimide film having a thickness of 12.5 µm. This silver film is cut into a planar shape similar to that of the above-described structure by a laser cutter, for example, and is attached to both surfaces of the above-described structure as the reflective films 231 and 232. Of the reflective films 231 and 232 attached to both surfaces of the above-described structure, the opening 290 is disposed in the reflective film 231 attached to the porous rubber layer side. The opening 290 is also formed by the laser cutter (Figure 5(E)).

The opening 290 is, for example, formed in a square shape of 100 µm × 100 µm. In a case of forming a multipoint pressure sensor, a plurality of the openings 290 are formed. In this case, it is desirable that light incident from one of the openings 290 forms one spot, and is formed to be spaced apart from an adjacent spot incident from an adjacent opening. For example, in a case where a thickness of the porous rubber layer is set to 800 µm, a light spot of light irradiated through one of the openings 290 at the second main surface 102 is less than 4 mm. Thus, it is preferable to set a distance between adjacent openings to be 5 mm or more.

### (Method for manufacturing porous rubber)

Sugar particles are added to the PDMS precursor liquid at a volume ratio of 1:1. As the sugar particles, general food-grade granulated sugar commercially available at supermarkets or the like can be used.

This mixture obtained by mixing the sugar particles into the PDMS precursor liquid is firmly sandwiched between two glass plates so that the sugar particles are reliably brought into contact with each other. After the PDMS precursor liquid mixed with the sugar particles is cured at 120°C, a film is removed from the glass plate and cut into a predetermined size. When the sugar particles in the mixture are dissolved in water and then dried, translucent porous rubber having a thickness of 800 µm is formed by the remaining PDMS. The porous rubber includes large pores having a diameter of around 100 to 300 µm, and small pores having a diameter of several tens of µm between the large pores.

Herein, a ratio of the thickness d of the porous rubber layer 100 to the average diameter D of the pores formed in the porous rubber layer 100 (d/D) is preferably about 2 to 20. When d/D is small, that is, when the average diameter D of the pores is large with respect to the thickness d of the porous rubber layer 100, uniformity of light scattering in the porous rubber layer 100 deteriorates. On the other hand, when d/D is large, that is, when the average diameter D of the pores is small with respect to the thickness d of the porous rubber layer 100, the number of the pores in the porous rubber layer 100 increases, light scattering becomes stronger, and sharpness of the light spot at the second main surface deteriorates.

### (Light detection layer)

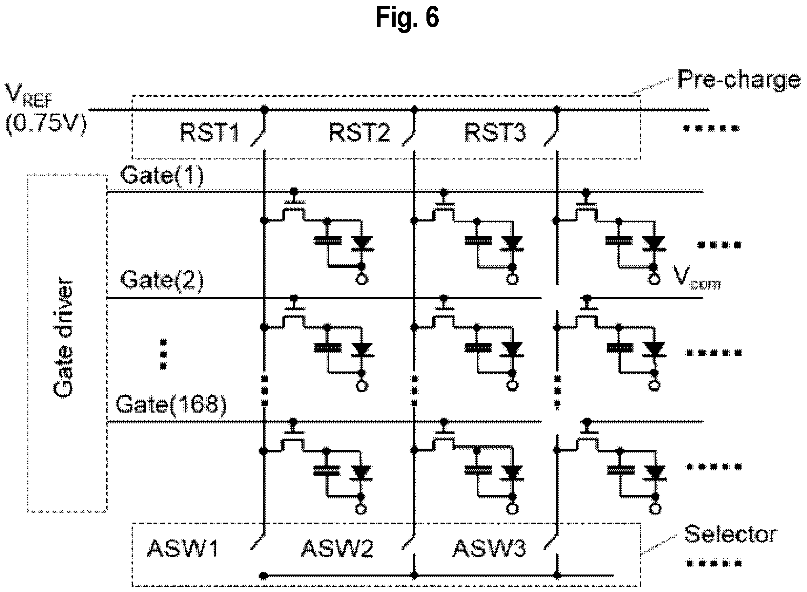

With reference to Figure 2 and Figure 6, the light detection layer will be described. Figure 6 is a schematic circuit diagram of the light detection layer.

The light detection layer 300 can be constituted of any suitable conventionally known image sensor that is a thin film structure having flexibility. The light detection layer 300 is configured, for example, by two-dimensionally arranging light receiving elements 320 each constituted of a PD 322 and a one-transistor one-capacitor (1T1C) structure 324 on a polyimide substrate 310. A transistor of the 1T1C structure 330 can be a low-temperature polysilicon thin film transistor (LTPS TFT). In this case, the LTPS TFT is constituted of an n-type metal-oxide-semiconductor (NMOS) TFT having a double-gate structure. A gate driver is formed by a complementary MOS (CMOS) circuit using both a p-type MOS (PMOS) TFT and an NMOS TFT.

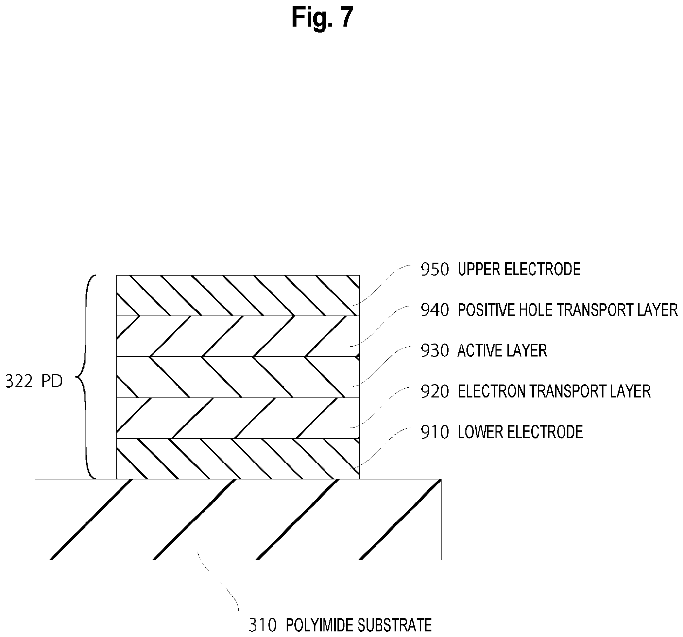

With reference to Figure 7, a configuration example of the PD as a constituent element of the light receiving element will be described. Figure 7 is a schematic diagram for explaining a configuration example of the PD as a constituent element of the light receiving element.

The PD 322 as a constituent element of the light receiving element 320 is configured, for example, by stacking a lower electrode 910, an electron transport layer 920, an active layer 930, a positive hole transport layer 940, and an upper electrode 950 in this order on the polyimide substrate 310.

The upper electrode 950 is required to allow light to be incident through the opening 290, so that the upper electrode 950 is preferably constituted of a material that is transparent to incident light. As the upper electrode 950 constituted of a transparent material, an Indium Tin Oxide (ITO) electrode, a Zinc Oxide (ZnO) electrode, and the like can be exemplified.

On the other hand, when an electrode constituted of a material having high reflectivity with respect to incident light such as a silver (Ag) electrode is used as the lower electrode 910, light reflected by the lower electrode 910 is incident again on the active layer 930, thereby deteriorating detection resolution. Accordingly, the lower electrode 910 is preferably constituted of a material that is transparent to incident light or has a property of absorbing incident light.

Examples of the lower electrode constituted of a transparent material include an ITO electrode, a ZnO electrode, and the like similarly to the upper electrode 950. Examples of the electrode constituted of a material having a property of absorbing incident light include a poly(3,4-ethylenedioxythiophene):poly(4-styrenesulfonic acid) (PEDOT:PSS) electrode, an electrode in which carbon is mixed into the PEDOT:PSS **electrode,** and the like. In order to prevent deterioration of detection resolution, it is preferable to dispose a layer having a property of absorbing incident light between the lower electrode 910 and the polyimide substrate 310. Examples of the layer having a property of absorbing incident light include a resin layer in which carbon is mixed, and the like.

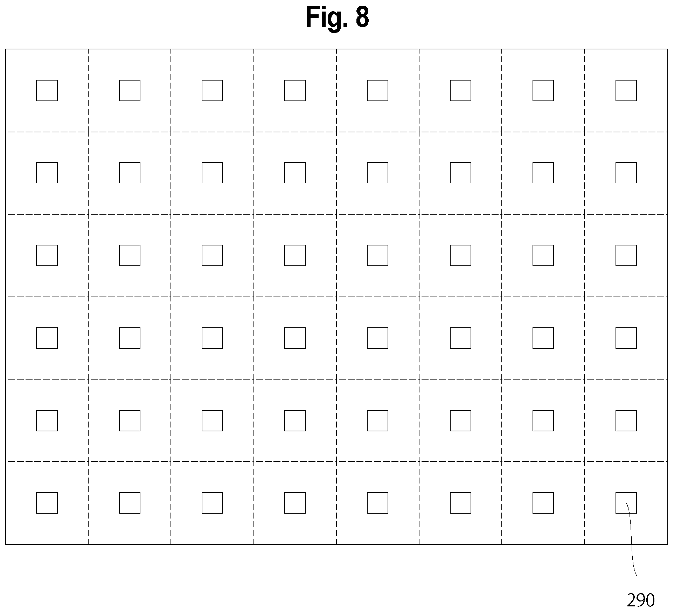

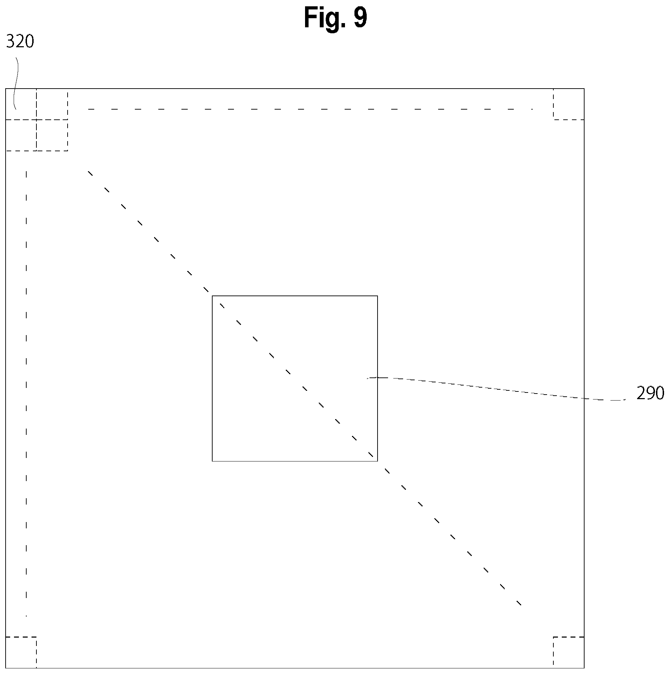

With reference to Figure 8 and Figure 9, a configuration of one unit will be described. Figure 8 is a plan view illustrating an entire effective area of the multipoint pressure sensor. Figure 9 is a plan view illustrating one unit.

As described above, when a light spot at the second main surface formed by light irradiated through one of the openings 290 is less than 4 mm, it is preferable to set a distance between adjacent openings to 5 mm or more. Thus, for example, a region having a planar shape of a 5 mm × 5 mm square is set as one unit, and the opening 290 of 100 µm × 100 µm is disposed at a center thereof. Thus, in a case where the effective area has a rectangular shape of 3 cm × 4 cm, a multipoint pressure sensor having 6 × 8 arrays with 48 units is obtained.

In this case, it is preferable that a distance between the end part of the optical fiber 240 and the opening 290 is also 5 mm or more.

The light receiving element 320 has a pixel size of 235 µm × 235 µm, for example. In a case of forming a multipoint pressure sensor having a rectangular effective area of 3 cm × 4 cm, 126 × 168 light receiving elements 320 are disposed in the light detection layer 300. In this case, the light receiving elements 320 included in one unit are 21 Pixels × 21 Pixels.

A signal output from each of the light receiving elements 320 is, for example, sent to an electronic computer such as a personal computer via any suitable electronic circuit including an amplifier, a filter, an analog-to-digital converter, and the like. The electronic computer acquires sharpness and a position of the light spot at the second main surface based on the signal sent from each of the light receiving elements via the electronic circuit, and reconstructs pressure applied to the porous rubber layer 100 in three axial directions based thereon.

### (Example 1)

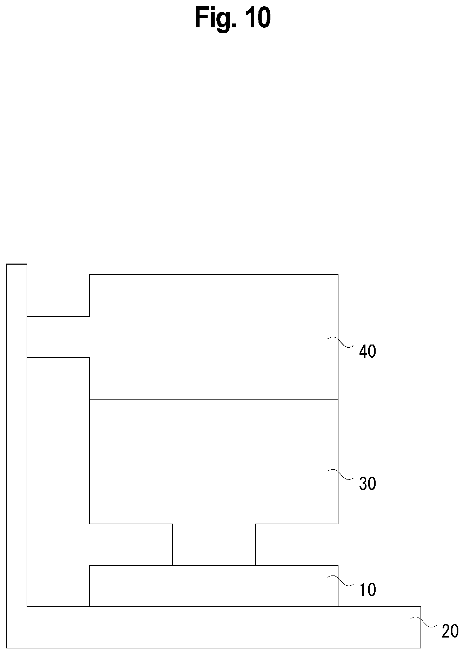

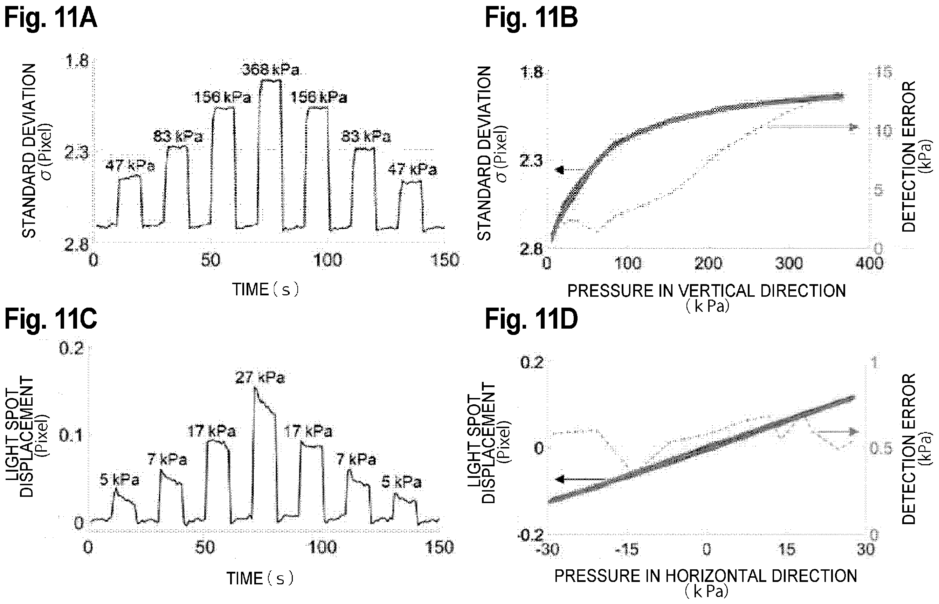

With reference to Figure 10 and Figure 11, pressure detection by one unit will be described as Example 1. Figure 10 is a schematic diagram for explaining a method for pressure detection. Figure 11 is a diagram illustrating a result of pressure detection by one unit.

Figures 11(A) and 11(B) illustrate results obtained by applying a pressure in the vertical direction to the pressure sensor, and Figures 11(C) and 11(D) illustrate results obtained by applying a pressure in the vertical direction and the horizontal direction to the pressure sensor.

In Figure 11(A), a horizontal axis indicates time (s), and a vertical axis indicates a standard deviation (σ) obtained by approximating a light intensity distribution in the longitudinal direction to a one-dimensional Gaussian distribution. In Figure 11(B), a horizontal axis indicates a magnitude of a pressure applied in the vertical direction, and a vertical axis indicates a standard deviation σ (Pixel). In Figure 11(C), a horizontal axis indicates time (s), and a vertical axis indicates displacement (Pixel) of a light spot in the longitudinal direction. In Figure 11(D), a horizontal axis indicates a magnitude of a pressure component applied in the horizontal direction, and a vertical axis indicates displacement (Pixel) of a light spot. Herein, Pixel indicates one pixel of the light detection layer (an area in which one light receiving element receives light), and in a case where displacement of the light spot is 0.1, it indicates that displacement having a size of 1/10 of one pixel has occurred.

A pressure sensor 10 according to the present invention was fixed to a support base 20, and a three-dimensional drive stage 40 to which a commercially available pressure sensor (hereinafter also referred to as a sensor for reference) 30 was attached was moved by a motor or the like to apply a pressure in the vertical direction to the pressure sensor 10.

As illustrated in Figure 11(A), the pressure is applied to the pressure sensor 10 in a pulsed manner while changing a magnitude of the pressure. When pressures having different magnitudes are applied from a state in which no pressure is applied up to a maximum pressure of 384 kPa, the standard deviation σ changes from 2.3 Pixels to 1.8 Pixels.

As illustrated in Figure 11(B), there is a correlation between a magnitude of the pressure applied in the vertical direction and the standard deviation σ, so that the magnitude of the pressure applied in the vertical direction can be obtained from the standard deviation σ.

Next, a pressure in the horizontal direction (herein, the longitudinal direction) is applied to the pressure sensor 10. When the pressure in the horizontal direction is applied, if a pressure in the vertical direction is not applied, contact between the pressure sensor and the sensor for reference is insufficient, so that accurate measurement cannot be performed. Thus, when a pressure in the horizontal direction is applied, a pressure in the vertical direction is applied at the same time. A magnitude of the pressure applied in the vertical direction is set to be constant.

The pressure is applied in a pulsed manner to the pressure sensor while setting the pressure in the vertical direction to a constant value and changing a magnitude of the pressure in the horizontal direction. As illustrated in Figure 11(C), when pressures having different magnitudes are applied in the horizontal direction from a state in which no pressure is applied up to a maximum pressure of 27 kPa, a position of the light spot changes from 0.02 Pixels to 0.18 Pixels.

As illustrated in Figure 11(D), there is a correlation between a magnitude of the applied pressure and the position of the spot, and a magnitude of the pressure applied in the horizontal direction can be obtained from the position of the spot. When pressures having different magnitudes from -27 kPa to +27 kPa are applied, a center position of the spot changes from -0.18 Pixels to 0.18 Pixels. Since a size of 1 Pixel is 235 µm, a change in a position of 0.1 pixel corresponds to a change of about 24 µm.

The standard deviation σ shown in Figure 11(B) and the light spot displacement shown in Figure 11(D) are illustrated by superimposing a plurality of measurement results. Figure 11(B) and Figure 11(D) illustrate test results obtained by repeating application of pressure shown in Figure 11(A) and Figure 11(C) 1000 times. As illustrated in Figure 11(B) and Figure 11(D), the plurality of measurement results hardly change, so that it can be found that this pressure sensor has high durability against repeated application of pressure.

### (Example 2)

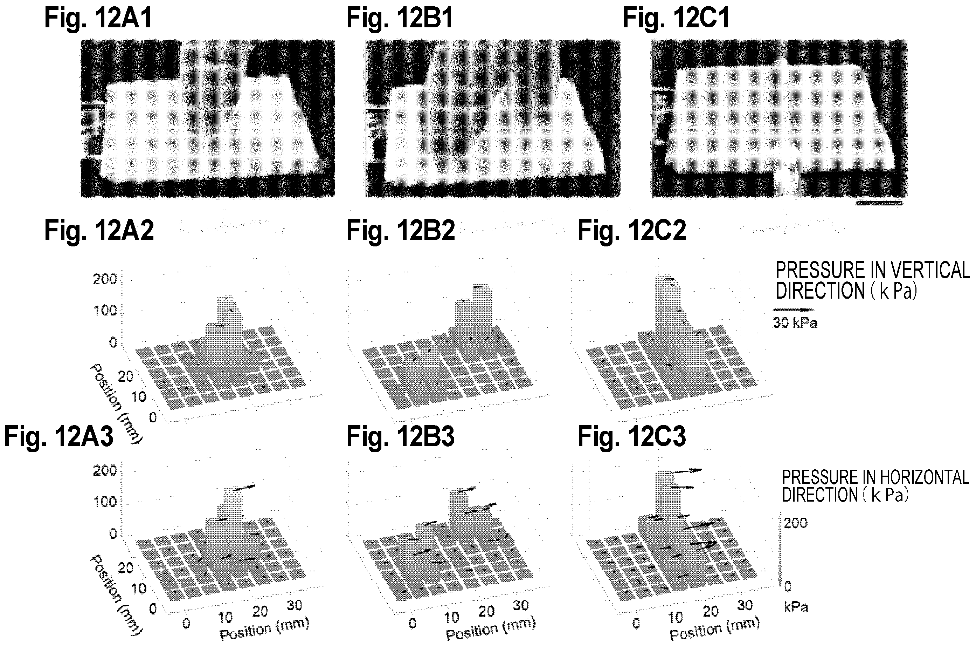

With reference to Figure 12, detection by a plurality of units will be described. Figure 12 is a schematic diagram for explaining detection by a plurality of units.

Figures 12(A1), 12(A2), and 12(A3) illustrate a case where a pressure is applied to the pressure sensor with one finger, Figures 12(B1), 12(B2), and 12(B3) illustrate a case where a pressure is applied to the pressure sensor with two fingers, and Figures 12(C1), 12(C2), and 12(C3) illustrate a case where a pressure is applied to the pressure sensor using a rod.

Figures 12(A1), 12(B1), and 12(C1) are diagrams illustrating a state where a pressure is applied. Figures 12(A2), 12(B2), and 12(C2) are diagrams mainly illustrating an applied pressure obtained in each of the 6 × 8 units when a pressure in the vertical direction is applied. Figures 12(A3), 12(B3), and 12(C3) are diagrams illustrating an applied pressure obtained in each of the 6 × 8 units when a pressure in the vertical direction and a pressure in the horizontal direction are applied at the same time. In Figures 12(A2), 12(B2), 12(C2), 12(A3), 12(B3), and 12(C3), a magnitude of the pressure in the vertical direction is indicated in a height direction, and a magnitude and a direction of the pressure in the horizontal direction are indicated by a length and a direction of an arrow.

As illustrated in Figure 12(A2), in a case where a pressure is applied to a vicinity of a center of the pressure sensor with one finger, the pressure applied to the vicinity of the center of the pressure sensor is detected. As illustrated in Figure 12(B2), in a case where pressures are applied to two points on a diagonal line of the pressure sensor with two fingers, the pressures applied to vicinities of two spaced-apart points on the diagonal line of the pressure sensor are detected. As illustrated in Figure 12(C2), in a case where a pressure is applied along a Y-axis to the pressure sensor, the pressure applied along the Y-axis is detected.

In Figures 12(A3), 12(B3), and 12(C3), it can be found that a pressure in the horizontal direction is applied in addition to the pressure in the vertical direction.

### (Example 3)

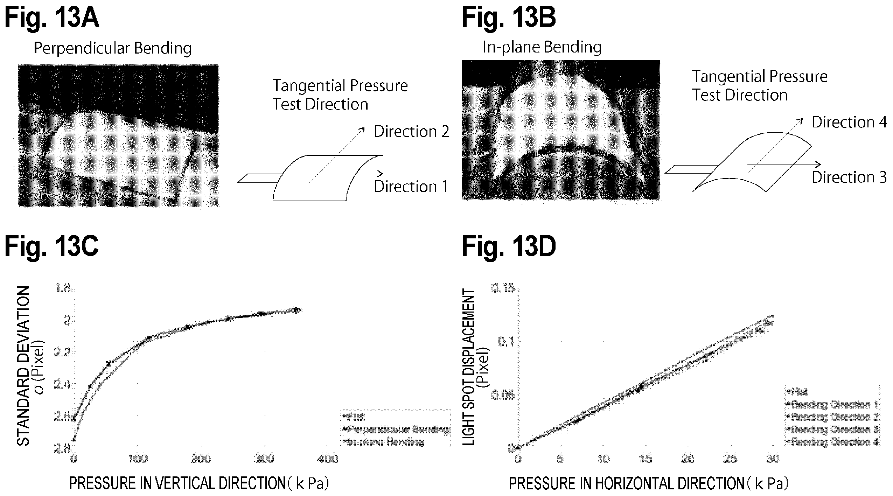

With reference to Figure 13, a measurement result obtained when the pressure sensor of the present invention is bent will be described. Figure 13 is a schematic diagram for explaining a measurement result obtained when the pressure sensor of the present invention is bent.

Herein, the pressure sensor is bent in accordance with a surface shape of a cylinder having a radius of 18 mm. Figure 13(A) illustrates an example in which the longitudinal direction is an extending direction of the rod, the pressure sensor is not bent in the longitudinal direction, and is bent in the width direction orthogonal to both of the longitudinal direction and the vertical direction. On the other hand, Figure 13(B) illustrates an example in which the width direction is the extending direction of the rod, the pressure sensor is not bent in the width direction, and is bent in the longitudinal direction. The pressure in the horizontal direction was measured in four ways, including the longitudinal direction (Direction 1) and the width direction (Direction 2) in a case where the longitudinal direction is the extending direction of the rod, and the longitudinal direction (Direction 3) and the width direction (Direction 4) in a case where the width direction is the extending direction of the rod.

In Figure 13(C), a horizontal axis indicates a magnitude of the pressure applied in the vertical direction, and a vertical axis indicates the standard deviation σ (Pixel). In Figure 13(C), a horizontal axis indicates time, and a vertical axis indicates displacement (Pixel) of a light spot.

Figure 13(C) illustrates a case where the pressure sensor is not bent (Flat), a case where the pressure sensor is bent in the width direction (Perpendicular Bending), and a case where the pressure sensor is bent in the longitudinal direction (in-plane Bending). Figure 13(D) illustrates a case where the pressure sensor is not bent, and cases of Directions 1 to 4.

As illustrated in Figure 13(C), when the pressure applied in the vertical direction is small, the standard deviation σ in a bent state, that is, a pressure to be measured, tends to be slightly larger as compared with that in Flat. This is considered to be because, when the sensor is bent, compressive stress (a pressure in the vertical direction) is generated in the porous rubber layer due to bending stress.

As described above, with the pressure sensor of the present invention, pressures applied in the vertical direction or the horizontal direction can be reconstructed. In addition, in the pressure sensor of the present invention, since the respective layers constituting the pressure sensor are constituted of thin films having flexibility and an overall thickness is about 1.5 mm, the pressure sensor itself also has flexibility and can be bent to a radius of 18 mm during measurement.

Herein, the example in which the thickness of the porous rubber layer 100 is 800 µm has been described, but the embodiment is not limited thereto. In the example described above, among 21 Pixels × 21 Pixels, signals of 15 Pixels × 15 Pixels close to the center were used for approximation to the Gaussian function. However, even when only signals of 9 Pixels × 9 Pixels or 7 Pixels × 7 Pixels close to the center were used, reliable results were obtained.

As the porous rubber layer 100 becomes thinner, the light spot becomes smaller. Thus, by making the porous rubber layer 100 thinner than 800 µm, a size of the light spot on the second main surface 102 can be set to about 2 mm × 2 mm. In this case, an area of one unit is 3 mm × 3 mm, and position resolution can be increased.

### (Other configuration examples of photoirradiation layer)

Herein, a case is exemplified in which the light guide layer and the reflective layers on both surfaces of the light guide layer are provided as the photoirradiation layer, the optical fiber is used as the light guide layer, and the laser diode (LD) is used as external light. However, the embodiment is not limited thereto.

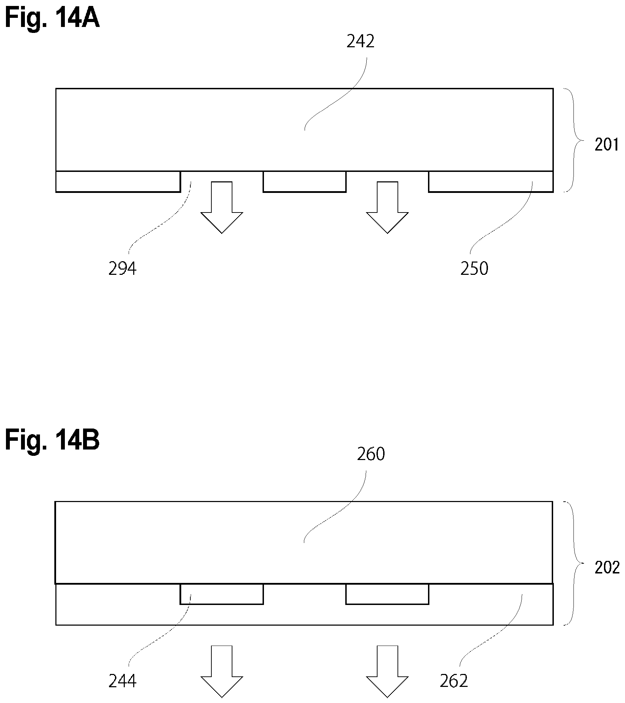

With reference to Figure 14, other configuration examples of the photoirradiation layer will be described. Figures 14(A) and 14(B) are schematic diagrams for explaining other configuration examples of the photoirradiation layer.

As illustrated in Figure 14(A), as a photoirradiation layer 201, a surface-emitting light source 242 having flexibility may be used. As the surface-emitting light source 242 having flexibility, organic Electro Luminescence (EL) is known. In a case of using the surface-emitting light source 242 as the photoirradiation layer 201, it is preferable to dispose a light shielding layer 250 on a light irradiation surface of the surface-emitting light source 242 that is in contact with the porous rubber layer 100, and to dispose an opening 294 in the light shielding layer.

The light shielding layer 250 is formed, for example, by depositing silver or aluminum on a polyethylene terephthalate (PET) film. The opening can be formed by partially etching and removing the deposited metal using photolithography or the like.

Alternatively, as illustrated in Figure 14(B), the photoirradiation layer 202 may be configured by arranging a micro Light Emitting Diode (LED) 244 having high directivity on a thin film 260 having flexibility, such as a polyimide substrate. In this case, light from the micro LED 242 becomes spot-like light along a direction orthogonal to the first main surface, similarly to the light that has passed through the opening described above. In this case, to prevent the micro LED 244 from directly compressing the porous rubber layer 100, it is preferable to dispose a transparent rubber layer 262 having flexibility between the micro LED 244 and the porous rubber layer 100.

### Reference Signs List

10 pressure sensor
20 support base
30 sensor for reference
40 three-dimensional drive stage
100 porous rubber layer
101 first main surface
102 second main surface
200, 201, 202 photoirradiation layer
210 light guide layer
220 diffusion film
221, 222 diffusion layer
231, 232 reflective layer
240 optical fiber
242 surface-emitting light source
244 micro LED
250 light shielding layer
260 thin film
262 rubber layer
290, 294 opening
300 light detection layer
310 polyimide substrate
320 light receiving element
322 PD
324 1T1C structure
500, 501 glass substrate
510 uniform TiO₂ particle layer
511 porous TiO₂ particle layer
520 TiO₂ particle
530 PDMS precursor liquid
910 lower electrode
920 electron transport layer
930 active layer
940 positive hole transport layer
950 upper electrode

## Claims

1. A pressure sensor comprising:
a porous rubber layer having a first main surface and a second main surface;
a photoirradiation layer disposed on the first main surface; and
a light detection layer disposed on the second main surface, wherein
spot-like light is irradiated onto the porous rubber layer along a direction from the first main surface toward the second main surface, and
a pressure applied to the porous rubber layer is measured based on an intensity distribution, at the second main surface, of the spot-like light irradiated onto the first main surface, the intensity distribution changing in accordance with a pressure applied to the porous rubber layer.

2. The pressure sensor according to claim 1, wherein a pressure in a direction orthogonal to the first main surface is measured based on sharpness of the intensity distribution, at the second main surface, of the spot-like light irradiated onto the first main surface, the sharpness changing in accordance with a magnitude of the pressure applied to the porous rubber layer in the direction orthogonal to the first main surface.

3. The pressure sensor according to claim 1 or 2, wherein a two-axis pressure in directions parallel to the first main surface is measured based on position information of the intensity distribution, at the second main surface, of the spot-like light irradiated onto the first main surface, the position information changing in accordance with a magnitude of the pressure applied to the porous rubber layer in the directions parallel to the first main surface.

4. The pressure sensor according to claim 3, wherein
the light detection layer includes light receiving elements that are two-dimensionally arranged, and
one unit is constituted of the plurality of light receiving elements and one spot-like light is irradiated onto a vicinity of a center of the unit.

5. The pressure sensor according to claim 4, wherein the units are two-dimensionally arranged.

6. The pressure sensor according to claim 1, wherein the porous rubber layer, the photoirradiation layer, and the light detection layer each have a thin film structure having flexibility.

7. The pressure sensor according to claim 1, wherein
the photoirradiation layer includes a light guide layer and reflective layers provided on both surfaces of the light guide layer, an opening is disposed in the reflective layer on the porous rubber layer side,
light is introduced from an outside into the light guide layer in a direction along the first main surface, and
the spot-like light is irradiated onto the porous rubber layer through the opening.

8. The pressure sensor according to claim 7, wherein the photoirradiation layer includes a diffusion layer between the light guide layer and the reflective layer.

9. The pressure sensor according to claim 1, wherein
the photoirradiation layer is constituted of a surface-emitting light source using organic electroluminescence,
a light shielding layer is disposed on a light irradiation surface of the photoirradiation layer that is in contact with the porous rubber layer, an opening is disposed in the light shielding layer, and
the spot-like light is irradiated onto the porous rubber layer through the opening.

10. The pressure sensor according to claim 1, wherein
the photoirradiation layer is configured by arranging a micro LED having high directivity on a substrate, and
the micro LED emits spot-like light in a direction orthogonal to the first main surface.

11. The pressure sensor according to claim 10, wherein
the light detection layer includes light receiving elements that are two-dimensionally arranged, and
one unit is constituted of one micro LED and the plurality of light receiving elements.

12. The pressure sensor according to claim 1, wherein a ratio of a thickness d of the porous rubber layer to an average diameter D of pores formed in the porous rubber layer (d/D) is 2 to 20.
